# EUROPÄISCHE PATENTSCHRIFT

(11) **EP 1 390 296 B1**
(45) Veröffentlichungstag und Bekanntmachung des Hinweises auf die Patenterteilung: **02.11.2005**
(21) Anmeldenummer: 02727549.4
(22) Anmeldetag: 10.04.2002
(51) Int. Cl.: C01B 33/027, B01J 8/38, B01J 8/00, H01L 31/18

(54) **VERFAHREN ZUR HERSTELLUNG VON HOCHREINEM, GRANULAREM SILIZIUM IN EINER WIRBELSCHICHT**
METHOD FOR PRODUCING HIGHLY PURE, GRANULAR SILICON IN A FLUIDISED BED
PROCEDE DE PRODUCTION DE SILICIUM GRANULAIRE EXTREMEMENT PUR DANS UN LIT FLUIDISE

(30) Priorität: 22.05.2001 DE 10124848
(43) Veröffentlichungstag der Anmeldung: 25.02.2004
(73) Patentinhaber: SOLARWORLD AKTIENGESELLSCHAFT, 53113 Bonn (DE)
(72) Erfinder: HEROLD, Heiko, 41470 Neuss (DE); HOLDENRIED, H., Günter, 42799 Leichlingen (DE); MLECZKO, Leslaw, 44801 Bochum (DE); PFAFFELHUBER, Matthias, 51373 Leverkusen (DE); KÖNIG, Theo, 79725 Laufenburg (DE)
(74) Vertreter: Rau, Manfred
(86) Internationale Anmeldenummer: PCT/EP2002/003973
(87) Internationale Veröffentlichungsnummer: WO 2002/094714

(56) Entgegenhaltungen:
- EP-A- 0 163 836
- US-A- 4 314 525
- US-A- 4 857 173
- PATENT ABSTRACTS OF JAPAN vol. 018, no. 542 (C-1261), 17. Oktober 1994 (1994-10-17) & JP 06 191817 A (TONEN CHEM CORP;OTHERS: 01), 12. Juli 1994 (1994-07-12)
- PATENT ABSTRACTS OF JAPAN vol. 013, no. 262 (C-608), 16. Juni 1989 (1989-06-16) & JP 01 065010 A (OSAKA TITANIUM SEIZO KK;OTHERS: 01), 10. März 1989 (1989-03-10)

## Beschreibung

Die Erfindung betrifft ein Verfahren zur Herstellung von hochreinem, granularem Silizium mit einer schmalen Korngrößenverteilung durch Zersetzung von siliziumhaltigen Gasen in einem Wanderbett- oder Wirbelschichtreaktor.

Unter siliziumhaltigen Gasen werden Gase verstanden, die Siliziumverbindungen oder Gemische von Siliziumverbindungen enthalten, die sich unter den erfindungsgemäßen Bedingungen aus der Gasphase unter Abscheidung von Silizium zersetzen lassen.

Der zunehmende Bedarf an Hochleistungselektronik und die Bestrebungen, den Verbrauch fossiler Brennstoffe durch Erschließung alternativer Energiequellen, wie der Solarenergie, zu senken, hat nicht nur zu einer erhöhten Nachfrage an Halbleitermaterialen geführt, sondern insbesondere zu einem drastischen Anstieg der Reinheitsanforderungen an solche Substanzen.

Dabei steht sowohl wegen der guten Verfügbarkeit der Ausgangsverbindungen als auch wegen der hervorragenden Halbleitereigenschaften die Herstellung von hochreinem Silizium für die Photovoltaik und Elektronik im Mittelpunkt des Interesses.

Eine gängige Methode dafür ist die thermische Zersetzung von Silanen oder Halogensilanen, die vorteilhafterweise in einem Wanderbett- oder Wirbelschichtreaktor durchgeführt wird.

Verfahren, in dem in einem fluidisierten Bett durch die thermische Zersetzung von Silanen oder Halogensilanen reines, elementares Silizium auf Silizium-Saatkörner aufwächst, sind beispielsweise aus den Patenten US-A 3,012,861 sowie US-A 3,012,862 bekannt.

In Wirbelschichtreaktoren wird ein anfänglich stationäres Bett von festen Partikeln, in diesem Falle Silizium-Saatkörnern, durch einen aufwärts gerichteten Gasstrom fluidisiert, dass heißt in einen flüssigkeitsähnlichen Zustand gebracht, wenn sein Volumenfluss einen bestimmten Grenzwert überschreitet, der unter anderem von der Dichte und dem Durchmesser der Partikel abhängt. Dieser Grenzwert wird Lockerungsgeschwindigkeit genannt. Die Vorteile einer solchen Fluidisierung sind zum Beispiel die intensive Durchmischung der Partikel und die große Kontaktfläche zwischen Feststoff und Gasphase.

Als siliziumhaltige Edukte für die thermische Zersetzung kommen dabei Siliziumwasserstoffverbindungen, also Silane, oder Halogensilane zum Einsatz, die mit Argon, Helium, Stickstoff oder auch Wasserstoff verdünnt sein können.

Die thermische Zersetzung von Silanen ist vorteilhaft, weil im Gegensatz zu Halogensilanen keine zusätzlichen Reduktionsmittel benötigt werden und als Nebenprodukte keine korrosiven Gase wie Halogenwasserstoffe entstehen. Darüber hinaus findet die Zersetzung von Silan schon im Bereich ab 500°C statt, während die meisten Halogensilane mindestens 850°C benötigen, was also energetisch sehr viel aufwändiger ist.

Für viele Anwendungen in der Photovoltaik oder der Halbleitertechnologie ist es notwendig, hochreines, granulares Silizium mit einer schmalen Komgrößenverteilung einzusetzen.

Hochrein bedeutet in diesem Zusammenhang einen Siliziumgehalt von mindestens 99.99999 %. Die gewünschten mittleren Partikelgrößen liegen im Allgemeinen zwischen 50 und 5000 µm. Eine schmale Korngrößenverteilung der Siliziumpartikel hat den Vorteil, dass für die weitere Verarbeitung des Siliziums, die überwiegend durch Umschmelzungen erfolgt, weniger Energie aufgewendet werden muss.

Aus der JP 01-065010 A ist ein Herstellungsverfahren nach dem Oberbegriff des Anspruchs 1 bekannt. Die Sichtung erfolgt dort über eine Zuführleitung für Wasserstoffgas, welche in eine Auslassleitung eines Wirbelschichtreaktors mündet.

Aus der EP 0 163 836 A1 ist die Verwendung eines Zick-Zack-Sichters bei einem Herstellungsverfahren von Granulaten aus einem flüssigen Produkt bekannt.

Das Patent US-A 3,012,862 beschreibt ein Verfahren zur Herstellung von reinem Silizium durch Zersetzung von Halogensilanen in Gegenwart eines Reduktionsmittels in einer Wirbelschicht. Dabei entstehen im Laufe des Aufwachsens Partikel, die aufgrund ihrer Größe nicht mehr fluidisiert werden und sich somit arn Boden des Bettes im Reaktor absetzen. Dieser Vorgang wird Segregation genannt. Über einen seitlichen Auslaufwerden diese großen Partikel einer externen Sichtung zugeführt und gegebenenfalls vorhandenes Feingut in den Reaktionsraum zurückgeführt. Ein solches Verfahren birgt ein erhebliches Risiko, da eine Segregation am Reaktorboden zunächst zu einer Verklebung des segregierten Bettinhalts, im weiteren Verlauf des gesamten Bettes und somit schließlich zum Abbruch des Prozesses führen kann.

In der US-A 4,818,495 wird eine Konstruktion beschrieben, bei der das zum Fluidisieren benötigte Gas (Fluidisiergas) über einen konischen Boden in den Reaktor geblasen wird. Zentrisch angeordnet darin ist eine Sichtzone, in die ein nach oben gerichteter Gasstrom (Sichtgas) eingeblasen wird. Auch in JP-A 06100312 wird eine solche zentrale Ausschleusung gezeigt. Bei einem zentralen Sichtauslass mit aufwärts gerichteter Gaseinspeisung gelangt das Sichtgas mit wesentlich höherer Geschwindigkeit als das Fluidisiergas in den Reaktor. Wegen der hohen Geschwindigkeit dominiert diese zentrale Strömung des Sichtgases und zieht sofort die sich im Reaktor aus dem Fluidisiergas bildenden Gasblasen zu dieser zentralen Strömung hin. Innerhalb dieser Gasblasen kann zwar auch eine Zersetzung von Silan oder Halogensilanen stattfinden, das sich bildende Silizium liegt dann aber in Form von feinsten Partikeln vor, die sich nicht mit der Oberfläche der Saatpartikel verbinden. Dieser Vorgang wird homogene Pyrolyse genannt und bildet im Allgemeinen Partikel mit Korngrößen unter 50 µm. Da die Sinkgeschwindigkeit dieser feinen Partikel sehr klein ist, werden sie mit dem Fluidisier- oder Sichtgas ausgetragen und stellen so einen Verlust dar, der die Ausbeute an auf Saatpartikeln abgeschiedenem Silizium (durch sogenannte heterogene Pyrolyse) drastisch reduziert. Arbeitet man dagegen ohne Sichtgas, so tritt aus dem Reaktor durch den zentralen Auslass Produkt mit einer sehr breiten Korngrößenverteilung aus. Es werden also zum Teil Partikel erzeugt, deren Größe weit über der Wunschgröße liegt. Darüber hinaus liegt auch noch unbelegtes Saatkorn vor.

Es bestand daher das Bedürfnis ein Verfahren zu finden, bei dem für die Photovoltaik und die Halbleitertechnologie geeignetes hochreines, granulares Silizium mit einer schmalen Korngrößenverteilung in hoher Ausbeute durch Zersetzung von siliziumhaltigen Gasen in einem Wanderbett- oder Wirbelschichtreaktor gewonnen werden kann.

Die vorliegende Erfindung betrifft daher ein Verfahren zur Herstellung von hochreinem, granularem Silizium mit schmaler Korngrößenverteilung durch Zersetzung von Silanen oder Halogensilanen in einer Wirbelschicht durch Aufwachsen von Silizium auf Silizium-Saatpartikeln, dadurch gekennzeichnet, dass das siliziumhaltige Gas in einem aufwärts gerichteten Strom dem Reaktionsraum zugeführt wird und der dadurch fluidisierte Bettinhalt kontinuierlich oder diskontinuierlich einer Sichtung unterzogen wird, indem aus dem fluidisierten Bett ein Partikelstrom einem außerhalb der Wirbelschicht angebrachten Sichter zugeführt wird und Partikel mit der gewünschten Größe abgetrennt und Partikel mit Untermaß gegebenenfalls ins Bett zurückgeführt werden.

Der besondere Vorteil dieses Verfahrens liegt darin, dass der fluidisierte Bettinhalt eine enge Partikelgrößenverteilung aufweist, was sich in einer verminderten Gefahr der Segregation und Defluidisierung wiederspiegelt. Ein weiterer Vorteil liegt darin, dass der fluidisierte Bettinhalt durch den Austrag der Partikel mit Wunschgröße insgesamt feiner ist, wodurch die Bildung kleinerer Gasblasen begünstig wird. Kleinere Gasblasen führen zu einer Verminderung der unerwünschten Staubbildung, so dass eine hohe Ausbeute an auf Saatpartikeln aufgewachsenem Silizium erreicht werden kann.

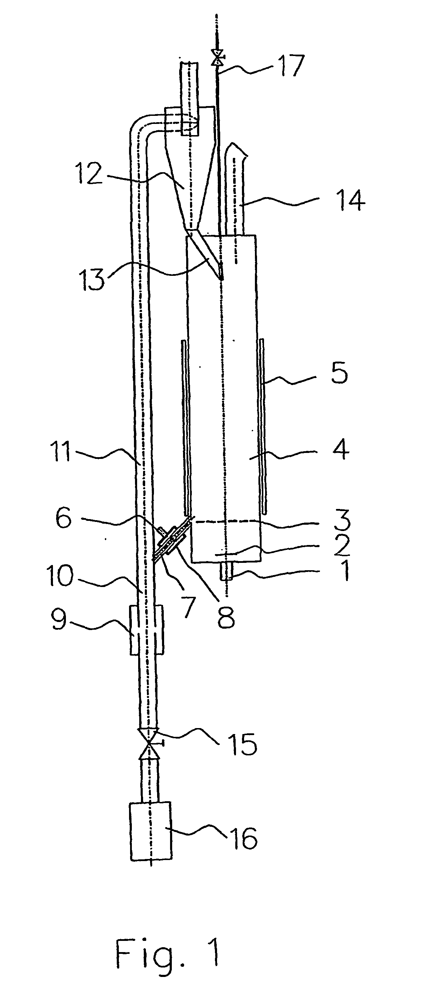

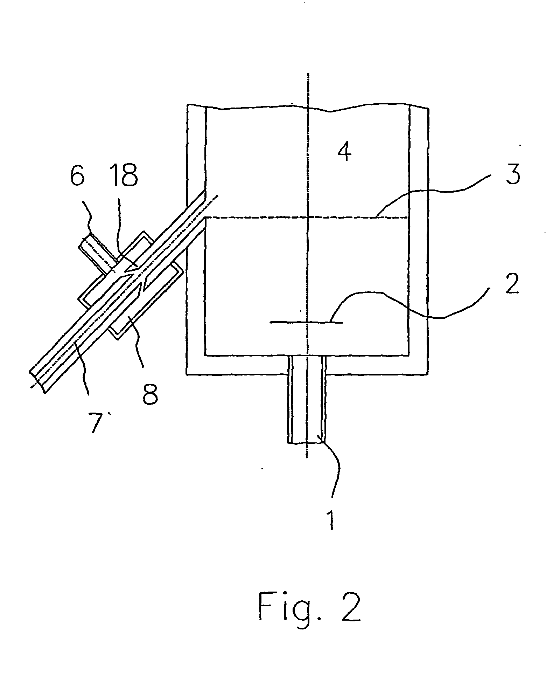

Anhand des in den Figuren 1 und 2 dargestellten Ausführungsbeispiels soll das erfindungsgemäße Verfahren erläutert werden. Dieses dient lediglich dem besseren Verständnis der Erfindung und limitiert die zugrundeliegenden Prinzipien der Erfindung in keiner Weise.

Figur 1 zeigt den Reaktor mit der Gaszuleitung (1), mit dem Bremsplatte (2), den Lochboden (3), den Reaktionsraum (4) mit der Heizung (5). Außerhalb des Reaktionsraumes befindet sich die Sperrgaszuleitung (6) zum Auslass (7) umhüllt vom Ringraum (8). Die Sichtgaszuführung (9) führt zum Sichtrohr (10) mit nachgeschalteter Feingutrückführung (11), die in den Feingutzyklon (12) mündet. Unterhalb des Zyklons befindet sich das Feingutklappenventil (13). Am oberen Ende des Reaktorraums befindet sich der Staubaustrag (14). Das Sichtrohr (10) ist unten mit dem Fertiggutauslassventil (15) vom Sammelbehälter (16) verbunden. Auf dem Reaktionsraum (4) befindet sich die Saatgutleitung (17).

Nach Figur 2 befindet sich über dem Lochboden (3) der nach unten führenden Auslass (7). Die Sperrgaszuleitung (6) führt zum Ringraum (8) mit den Treibstrahlbohrungen (18), der den Auslass (7) umschließt.

Nach Figur 1 wird das siliziumhaltige Gas über die Gaszuleitung (1) zum Reaktor geführt.

Neben Silan SiH₄ und seinen höheren Homologen, wie zum Beispiel Disilan Si₂H₆, Trisilan Si₃H₈, Tetrasilan Si₄H₁₀ und Hexasilan Si₆H₁₄, können Halogensilane der allgemeinen Formel SiHₘHal₍₄₋ₘ₎, in der m für eine ganze Zahl von Null bis Drei und Hal für Chlor, Brom oder Iod stehen kann, eingesetzt werden. Auch eine Mischung solcher Siliziumverbindungen ist für das erfindungsgemäße Verfahren geeignet. Bei Siliziumverbindungen, die bei Raumtemperatur nicht gasförmig sind, kann die Überführung in die Gasphase zum Beispiel thermisch erfolgen.

Bevorzugt sind Silan SiH₄, Disilan Si₂H₆, Trisilan Si₃H₈, Tetrasilan Si₄H₁₀ und Hexasilan Si₆H₁₄, besonders bevorzugt ist Silan SiH₄.

Der Volumenanteil der Silane oder Halogensilane im zugeführten Gas kann dabei insgesamt zum Beispiel zwischen 1% und 100% liegen, bevorzugt sind 5 bis 20 Volumen-%.

Des weiteren kann das siliziumhaltige Gas noch beispielsweise Edelgase wie zum Beispiel Argon oder Helium, Stickstoff, andere unter den Reaktionsbedingungen inerte Gase oder Wasserstoff oder eine beliebige Mischung dieser Gase enthalten. Bevorzugt sind Stickstoff und Wasserstoff, besonders bevorzugt ist Wasserstoff.

Bei Einsatz von Halogensilanen ist darauf zu achten, dass pro Mol Äquivalent Halogen mindestens ein Mol-Äquivalent Wasserstoff im siliziumhaltigen Gas vorhanden ist. Diese Wasserstoffäquivalente können z.B. aus Silanen, Mono-, Di- oder Trihalogensilanen oder auch elementaren Wasserstoff stammen.

Der Eintrittsimpuls des siliziumhaltigen Gasstroms bricht sich an dem nachgeschalteten Bremsplatte (2).

Es handelt sich dabei um eine übliche Maßnahme, um einen gleichmäßigen Durchtritt des als Fluidisiergas verwendeten, siliziumhaltigen Gasstrom durch den Lochboden (3) zu gewährleisten. Das erfindungsgemäße Verfahren kann auch ohne dieses Bremsplatte durchgeführt werden. Auch mit anderen Vorrichtungen, die in der Lage sind, den Impuls des eintretenden Gasstroms zu brechen, wie zum Beispiel Umlenkrohr oder -düsen oder ein weiterer Lochboden sind möglich.

Die Einströmgeschwindigkeit des zugeführten siliziumhaltigen Gases sollte zwischen dem Einfachen und Zehnfachen der für die Fluidisierung des Bettes nötigen Lockcrungsgeschwindigkeit betragen, bevorzugt ist das Eineinhalb- bis Siebenfache.

Die Temperatur des zugeführten siliziumhaldgen Gases liegt vorteilhafterweise unter der Temperatur, bei der sich das siliziumhaltige Gas noch nicht zersetzt. Im Falle von Silan ist das eine Temperatur von etwa 300°C. Die minimale Einspeisetemperatur ist so zu wählen, dass sie mindestens so hoch ist, wie der Siedepunkt der Verbindung bezogen auf den eingesetzten Partialdruck im siliziumhaltigen Gas, jedoch unterhalb des jeweiligen Zersetzungsbereich liegt.

Der Druckverlust des Lochbodens (3), der den Reaktionsraum nach unten abschließt, kann so gewählt werden, dass eine gleichmäßige Zuströmung zum Reaktionsraum im Reaktor (4) erfolgt.

Der Druck, bei dem das erfindungsgemäße Verfahren durchgeführt werden kann ist unkritisch. Es ist jedoch vorteilhaft bei Drucken von 50 bis 50000 mbar zu arbeiten. Bevorzugt sind 100 bis 10000 mbar, besonders bevorzugt 200 bis 6000 mbar. Alle angegebenen Druckwerte sind Absolutwerte und beziehen sich auf den Druck, der in Strömungsrichtung gesehen hinter der Wirbelschicht herrscht.

Die Temperatur des Lochboden sollte so gewählt werden, dass sie während des Aufwachsprozesses unterhalb des Zersetzungsbereichs der eingesetzten Siliziumverbindungen liegt. Für Silan liegt dieser Bereich oberhalb von etwa 300°C. Bevorzugt liegt die Temperatur des Lochbodens zwischen 20 und 300°C, besonders bevorzugt zwischen 200 und 250°C.

Höhere Temperaturen können zur Abscheidung von Silizium im Lochboden, damit also zur Verstopfung der Öffnungen und letztendlich zum Abbruch des Prozesses führen. Der Lochboden kann mehrere Öffnungen besitzen, so dass der in den Reaktionsraum des Reaktors eintretende siliziumhaltige Gasstrom das darüber liegende Bett gleichmäßig fluidisieren kann.

Umgeben ist der Reaktor (4) von einer Heizung, z.B. Widerstandsheizung (5).

Die Heizung heizt das Bett in dem Maße auf, dass die Temperatur im Reaktorinneren oberhalb des Zersetzungsbereichs des siliziumhaltigen Gases, jedoch unterhalb des Schmelzpunktes von Silizium (1414°C) liegt. Die Temperatur der Reaktorwand liegt beispielsweise 2 bis 200°C höher als die Temperatur im Reaktorinneren, bevorzugt zwischen 5 und 80°C höher.

Beim Einsatz von Silan liegt der vorteilhafte Temperaturbereich im Reaktorinneren zwischen 500 und 1400°C, bevorzugt bei 600 bis 1000°C und besonders bevorzugt bei 620 bis 800 °C.

Durch den seitlichen Auslass (7) gelangt ein Teil des fluidisierten Bettinhalts in den Sichter (10), der über die Sichtgaszuführung (9) mit Sichtgas versorgt wird.

Es können beispielsweise auch mehrere Auslässe vorhanden sein. Der Auslass oder dieAnlässe können auch zum Beispiel auch im Lochboden (3) integriert sein.

Der Sichter kann beispielsweise ein Steigrohr- oder ein Zick-Zack-Sichter sein. Der Sichter sollte in jeder Ausführungsform jedoch außerhalb der Wirbelschicht liegen.

Das Sichtgas kann ein unter den Reaktionsbedingungen inertes Gas wie zum Beispiel ein Edelgas wie beispielsweise Argon oder Helium, Stickstoff, Wasserstoff oder eine beliebige Mischung davon sein. Stickstoff und Wasserstoff sind bevorzugt, Wasserstoff ist besonders bevorzugt.

Das vom Sichtgas getragene Feingut wird über das Steigrohr (11) einem Zyklon (12) zugeführt und dort abgeschieden.

Für das erfindungsgemäße Verfahren sind auch andere Vorrichtungen zur Feingutabtrennung wie zum Beispiel Filter geeignet.

Die Rückeinleitung in den Reaktor erfolgt über eine Feingutrückführleitung mit einem Klappenventil (13), das selbsttätig öffnet, wenn sich in der Feingutrückführleitung (13) eine ausreichend hohe Feingutsäule aufgestaut hat.

Auch das Sammeln des Feinguts in einem Sammelbehälter oder eine Rückführung aus dem Zyklon ins Bett ist möglich. Bevorzugt ist die Rückführung des Feinguts in den Reaktionsraum.

Durch den Staubaustrag (14) wird aus dem Reaktor Feingut ausgetragen.

Über die Saatgutleitung (17), kann neues Saatgut dem Reaktionsraum zugeführt werden.

Auch die seitliche Anbringung der Saatgutleitung ist möglich.

Siliziumpartikel, die im Sichter (10) nicht zum Zyklon (12) geführt werden, fallen nach unten und gelangen über das geöffnete Absperrventil (15) in einen Sammelbehälter (16).

Über die Regelung des Sichtgasstroms kann nach üblichen Verfahren die Wunschkomgröße eingestellt werden.

Nach Figur 2 können Siliziumpartikel aus dem fluidisierten Bett aus dem Reaktor (4) aus dem seitlich nach unten führendem Auslass (7) treten. Die austretende Menge kann dabei mit einem Regelgasstrom, der über die Zuleitung (6) und dem Ringraum (8) sowie den schräg gegen die Auslaufrichtung geneigten Bohrungen (18) in den Auslass (7) gelangt, reguliert werden. Auch die Sperrung ist dadurch möglich.

Auf diese Weise kann die Sichtung kontinuierlich oder diskontinuierlich gestaltet werden, die kontinuierliche Sichtung ist bevorzugt.

Vorteilhaft ist eine Ausschleuserate zur Sichtung, die pro Stunde dem 0,1 bis 15-fachen, bevorzugt dem 0,5 bis 5-fachen und ganz besonders bevorzugt dem 1 bis 3-fachen des Bettinhaltes entspricht

Als Regelgas können beispielsweise unter Reaktionsbedingungen inerte Gase wie zum Beispiel Edelgase wie beispielsweise Argon oder Helium, Stickstoff, Wasserstoff oder eine beliebige Mischung davon verwendet werden. Stickstoff und Wasserstoff sind bevorzugt, Wasserstoff ist besonders bevorzugt.

Die Regelung der auslaufenden Partikelmenge kann zum Beispiel auch durch ein mechanisches Regelventil erfolgen. Der Auslass (7) kann beispielsweise auch in den Lochboden (3) integriert sein.

Im Laufe des Prozesses erhält man durch das erfindungsgemäße Verfahren im Sammelbehälter (16) Partikel, deren mittlere Wunschgröße zwischen 50 und 5000 µm betragen kann. Die Korngrößenverteilung des Produktes kann dabei derart sein, dass mindestens 90 Gew.-% der abgetrennten Partikel eine Korngröße besitzen, die maximal 20 % von der Wunschgröße abweicht. Bevorzugt ist eine Korngrößenverteilung, bei der mindestens 90 Gew.-% der abgetrennten Partikel eine Korngröße besitzen, die maximal 10 % von der Wunschgröße abweicht.

Bevorzugt wird das erfindungsgemäße Verfahren in ein Gesamtverfahren zur Herstellung von Silan und hochreinem Silizium integriert.

Besonders bevorzugt wird das erfindungsgemäße Verfahren in ein Verfahren zur Herstellung von Silan und/oder hochreinem Silizium integriert, das aus folgenden Schritten besteht:
1. Trichlorsilan-Synthese Verfahren mit anschließender destillativer Isolierung des erzeugten Trichlorsilans und Rückführung des nicht umgesetzten Siliziumtetrachlorids und gewünschtenfalls des nicht umgesetzten Wasserstoffs.
2. Disproportionierung des Trichlorsilans zu Silan und Siliciumtetrachlorid über die Zwischenstufen Dichlorsilan und Monochlorsilan an basischen Katalysatoren, vorzugsweise Amingruppen enthaltenden Katalysatoren, in apparativ zweistufiger oder einstufiger Ausführung und Rückführung des erzeugten, als Schwersieder anfallenden Siliciurntetrachlorids in die erste Verfahrensstufe.
3. Verwendung des Silans in der im vorangehenden Schritt anfallenden Reinheit oder Reinigung des Silans auf die vom weiteren Verwendungszweck geforderte Reinheit, vorzugsweise durch Destillation, besonders bevorzugt durch Destillation unter Druck.
4. Thermische Zersetzung des Silans zu hochreinem Silizium und erfindungsgemäßen Verfahren.

### Ausgangsparameter:

| | | |
|---|---|---|
| Reaktordurchmesser | 52 | mm |
| Bettmasse | 800 | g |
| Saatpartikeldurchmesser | 200 | µm |
| Reaktionstemperatur | 650 | °C |
| Druck | 1 | bar |
| Silan | 10 | Vol.-% |
| Wasserstoff | 90 | Vol.-% |
| Gasgeschwindigkeit | 1.1 | m/s |

### Vergleichsbeispiel 1 (Reaktor ohne Sichter)

Es wird ein Laborreaktor im kontinuierlichen Betrieb gefahren. Diesem Reaktor werden ständig Saatpartikel (200 µm) zugeführt und Produktpartikel entnommen. Bei einer Zugaberate von ca. 5 g/h werden 113 g/h Produktpartikel mit einem mittleren Durchmesser von 740 µm produziert (Silanumsatz: 39,7 % Staubselektivität: 14,3 % u/u_{mf}:2,6). Das Partikelgrößensprektrum erstreckt sich dabei von 200 bis 1600 µm (90 % Durchgang).

### Beispiel 2 (Reaktor mit Sichtung)

Dieser Reaktor wird wie im Beispiel 1 beschrieben kontinuierlich betrieben. Dabei werden bei einer Zugaberate von 0,8 g/h Saatpartikel ca. 105 g/h Silizium produziert. Bei einem Trennkorn von 1000 µm ergibt sich eine mittlere Bettpartikeldurchmesser von 770 µm und ein mittlerer Produktpartikeldurchmesser von 1022 µm (bei einer Reaktorentnahmerate von ca. 1300 g/h) (Silanumsatz: 41 % Staubselektivität: 14,4 % u/u_{mf}:2,8).

## Patentansprüche

1. Verfahren zur Herstellung von hochreinem, granularem Silizium mit schmaler Korngrößenverteilung durch Zersetzung von Silanen oder Halogensilanen in einer Wirbelschicht durch Aufwachsen von Silizium auf Silizium-Saatpartikeln, wobei
- das siliziumhaltige Gas in einem aufwärts gerichteten Strom dem Reaktionsraum (4) zugeführt wird und
- der fluidisierte Bettinhalt einer Sichtung unterzogen wird, indem aus dem fluidisierten Bett ein Partikelstrom einem außerhalb der Wirbelschicht angebrachten Sichter (10) zugeführt wird und Partikel mit der gewünschten Größe abgetrennt werden,
**dadurch gekennzeichnet, dass** durch den mindestens einen Auslass (7) ein Teil des fluidisierten Bettinhalts aus dem Reaktionsraum in den Sichter gelangt und der Partikelstrom aus dem fluidisierten Bett durch einen Gasstrom, der entgegen der Auslaufrichtung durch eine oder mehrere Öffnungen (18) in den Auslass eintritt, in der Menge geregelt oder gesperrt werden kann.

2. Verfahren nach Anspruch 1, **dadurch gekennzeichnet, dass** die Sichtung kontinuierlich oder diskontinuierlich erfolgt.

3. Verfahren nach den Ansprüchen 1 bis 2, **dadurch gekennzeichnet, dass** nach dem Sichtungsvorgang Partikel mit Untermaß wieder ins fluidisierte Bett zurückgeführt werden.

4. Verfahren nach den Ansprüchen 1 bis 3, **dadurch gekennzeichnet, dass** die mittlere Wunschgröße der im Sichtungsprozess erhaltenen Partikel zwischen 50 bis 5000 mm liegt.

5. Verfahren nach den Ansprüchen 1 bis 4, **dadurch gekennzeichnet, dass** mindestens 90 % der im Sichtungsprozess erhaltenen Partikel maximal 20 % von der gewünschten mittleren Korngröße abweichen.

6. Verfahren nach den Ansprüchen 1 bis 5, **dadurch gekennzeichnet, dass** der dem Reaktor zugeführte siliziumhaltige Gasstrom über einen Reaktorboden zugeführt wird, der mehr als eine Öffnung besitzt.

7. Verfahren nach den Ansprüchen 1 bis 6, **dadurch gekennzeichnet, dass** der Druck im dem Bereich des Reaktors, der sich in Strömungsrichtung des siliziumhaltigen Gases gesehen hinter der Wirbelschicht befindet, zwischen 50 und 50000 mbar liegt.

8. Verfahren nach den Ansprüchen 1 bis 7, **dadurch gekennzeichnet, dass** die Sichtung in einem Steigrohrsichter durchgeführt wird.

9. Verfahren nach den Ansprüchen 1 bis 7, **dadurch gekennzeichnet, dass** die Sichtung in einem Zick-Zack-Sichter durchgeführt wird.

10. Verfahren nach den Ansprüchen 1 bis 9, **dadurch gekennzeichnet, dass** das aus dem Sichtungsprozess stammende Feingut in einem Staubabscheider vom Sichtgas getrennt wird.

11. Verfahren nach Anspruch 10, **dadurch gekennzeichnet. dass** das aus dem Sichtungsprozess stammende Feingut in einem Zyklon vom Sichtgas getrennt wird.

12. Verfahren nach den Ansprüchen 1 bis 11, **dadurch gekennzeichnet, dass** das vom Sichtgas getrennte Feingut wieder dem Reaktionsraum zugeführt wird.

13. Verfahren nach den Ansprüchen 1 bis 12, **dadurch gekennzeichnet, dass** siliziumhaltige Gas Silan SiH₄ enthält.

14. Verfahren nach den Ansprüchen 1 bis 13, **dadurch gekennzeichnet, dass** siliziumhaltige Gas Wasserstoff enthält.

## Claims

1. A method for producing highly pure, granular silicon with a narrow particle-size distribution by decomposing silanes or halosilanes in a fluidised bed and epitaxially growing silicon on silicon seed particles,
- wherein the gas containing silicon is supplied to the reaction chamber (4) in an upward flow; and
- wherein the contents of the fluidized bed are separated in a continuous manner, whereby a particle stream from the fluidized bed is supplied to a separator (10) mounted outside the fluidized bed and particles of the desired size are separated;
**characterized in that** a part of the contents of the fluidized bed reaches the separator from the reaction chamber through the at least one outlet (7) and the particle flow from the fluidized bed can be controlled or blocked regarding the amount by a gas flow entering the outlet opposite to the outlet flow direction through one or several apertures (18).

2. A method according to claim 1, **characterized in that** the separation is carried out in a continuous or discontinuous manner.

3. A method according to claims 1 to 2, **characterized in that** after separation undersized particles are returned to the fluidized bed.

4. A method according to claims 1 to 3, **characterized in that** the average desired size of the particles obtained by the separation process is between 50 and 5000mm.

5. A method according to claims 1 to 4, **characterized in that** at least 90% of the particles obtained by the separation process have a grain size differing from the desired average particle size by maximum 20%.

6. A method according to claims 1 to 5, **characterized in that** the silicic gas flow introduced into the reactor is introduced through a reactor bottom with more than one aperture.

7. A method according to claims 1 to 6, **characterized in that** the pressure prevailing in the part of the reactor located behind the fluidized bed as seen in flow direction of the silicic gas, is between 50 and 50000mbar.

8. A method according to claims 1 to 7, **characterized in that** the separation is carried out in a vertical upflow separator.

9. A method according to claims 1 to 7, **characterized in that** the separation is carried out in a zigzag separator.

10. A method according to claims 1 to 9, **characterized in that** the fine material occurring during the separation process is separated from the separation gas in a dust separator.

11. A method according to claim 10, **characterized in that** the fine material occurring during the separation process is separated from the separation gas in a cyclone.

12. A method according to claims 1 to 11, **characterized in that** the fine material separated from the separation gas is returned to the reaction zone.

13. A method according to claims 1 to 12, **characterized in that** the silicic gas contains silane SiH₄.

14. A method according to claims 1 to 13, **characterized in that** the silicic gas contains hydrogen.

## Revendications

1. Procédé de fabrication de silicium granulaire hautement pur, ayant une distribution granulométrique étroite, par décomposition des silanes ou des halogénosilanes dans un lit fluidisé, en faisant croître du silicium sur des particules germes de silicium, dans lequel :
- le gaz contenant du silicium est amené à la chambre réactionnelle (4) dans un courant dirigé vers le haut, et
- le contenu du lit fluidisé est soumis à un triage, en amenant un courant de particules depuis le lit fluidisé à un trieur (10), disposé hors du lit fluidisé, et en séparant les particules de taille voulue,
**caractérisé en ce qu'**une partie du contenu du lit fluidisé sort de la chambre réactionnelle par au moins une évacuation (7) pour aller dans le trieur et le courant de particules sortant du lit fluidisé peut être régulé ou bloqué en quantité par un courant gazeux qui entre dans l'évacuation dans le sens contraire de l'écoulement par une ou plusieurs ouvertures (18).

2. Procédé selon la revendication 1, **caractérisé en ce que** le triage se fait en continu ou en discontinu.

3. Procédé selon les revendications 1 à 2, **caractérisé en ce que**, postérieurement à l'opération de triage, des particules ayant une taille inférieure à la taille requise sont de nouveau renvoyées dans le lit fluidisé.

4. Procédé selon les revendications 1 à 3, **caractérisé en ce que** la taille moyenne voulue des particules obtenues dans le procédé de triage se situe entre 50 et 5000 mm.

5. Procédé selon les revendications 1 à 4, **caractérisé en ce qu'**au moins 90 % des particules obtenues dans le procédé de triage dévient au maximum de 20 % de la granulométrie moyenne voulue.

6. Procédé selon les revendications 1 à 5, **caractérisé en ce que** le courant de gaz contenant du silicium, amené au réacteur, est amené par le fond du réacteur, qui possède plus d'une ouverture.

7. Procédé selon les revendications 1 à 6, **caractérisé en ce que** la pression régnant dans la zone du réacteur qui se trouve derrière la couche fluidisée, vu dans le sens de circulation du courant de gaz contenant du silicium, se situe entre 50 et 50000 mbars.

8. Procédé selon les revendications 1 à 7, **caractérisé en ce que** le triage est réalisé dans un trieur à colonne ascendante.

9. Procédé selon les revendications 1 à 7, **caractérisé en ce que** le triage se fait dans un trieur en zigzag.

10. Procédé selon les revendications 1 à 9, **caractérisé en ce que** les fines provenant du procédé de triage sont séparées du gaz de triage dans un séparateur de poussières.

11. Procédé selon la revendication 10, **caractérisé en ce que** les fines provenant du procédé de triage sont séparées du gaz de triage dans un cyclone.

12. Procédé selon les revendications 1 à 11, **caractérisé en ce que** les fines séparées du gaz de triage sont de nouveau dirigées dans la chambre réactionnelle.

13. Procédé selon les revendications 1 à 12, **caractérisé en ce que** le gaz contenant du silicium comprend du silane SiH₄.

14. Procédé selon les revendications 1 à 13, **caractérisé en ce que** le gaz contenant du silicium comprend de l'hydrogène.
